# EUROPÄISCHE PATENTSCHRIFT

(11) **EP 0 412 190 B1**
(45) Veröffentlichungstag und Bekanntmachung des Hinweises auf die Patenterteilung: **27.10.1993**
(21) Anmeldenummer: 89114763.9
(22) Anmeldetag: 09.08.1989
(51) Int. Cl.: G01V 5/00

(54) **Vorrichtung zum Durchstrahlen von Gegenständen mittels fächerförmiger Strahlung**
Device for transmitting fan-shaped radiation through objects
Dispositif pour transmettre des faisceaux en éventail à travers des objets

(43) Veröffentlichungstag der Anmeldung: 13.02.1991
(73) Patentinhaber: Heimann Systems GmbH & Co. KG, D-65020 Wiesbaden (DE)
(72) Erfinder: Bermbach, Rainer, Dr.-Ing., D-6500 Mainz-Laubenheim (DE); Geus, Georg, Dipl.-Ing., D-6200 Wiesbaden (DE); Dönges, Gerhard, Dipl.-Ing., D-6209 Heidenrod (DE); Koch, Cornelius, Dipl.-Ing., D-6200 Wiesbaden (DE)

(56) Entgegenhaltungen:
- DE-A- 3 708 843
- DE-U- 8 506 187
- GB-A- 2 113 828

## Beschreibung

Die Erfindung betrifft eine Vorrichtung zum Durchstrahlen von Gegenständen, vorzugsweise Containern und/oder Fahrzeugen mit fächerförmiger Strahlung, die beispielsweise an Flughäfen eingesetzt wird, um den Inhalt auf Bomben, Waffen, Drogen und Schmuggelgut zu durchsuchen.

Aus dem DE-GM 85 06 187 ist eine Vorrichtung für Containerdurchsuchungen bekannt. Bei dieser Vorrichtung ist die Fächerebene eines Strahlengenerators (Linearbeschleuniger) senkrecht zu einer Transportstrecke für Container ausgerichtet. Die fächerförmige Strahlung des Strahlengenerators trifft, nachdem sie einen Teilquerschnitt des Containers durchdrungen hat, auf einen zeilenförmigen Strahlenempfänger, an dem eine Einrichtung zur Signalauswertung angeschlossen ist. Zur vollständigen Durchstrahlung des Querschnittes des Containers wird der Strahlengenerator jeweils um den Fächerwinkel verschwenkt, oder es sind beispielsweise drei Strahlengeneratoren vorgesehen, die um den Fächerwinkel versetzt angeordnet sind, so daß die Strahlung jedes Fächers auf einen Bereich eines L-förmigen Strahlenempfängers auftrifft. Die Signale des Strahlenempfängers werden, während der Container auf einer von Rollen gebildeten Transportstrecke am Strahlengenerator und Strahlenempfänger vorbeigeführt wird, in einer Bildverarbeitungsanlage verarbeitet, so daß, wenn der Container den Strahlengenerator und den Strahlenempfänger passiert hat, ein Strahlungsschattenbild des Containers auf einem Monitor wiedergegeben wird. Bei dieser Vorrichtung wird der Container nur von einer Seite aus durchstrahlt, wodurch die Erkennbarkeit von Gegenständen im Container erschwert ist.

Aus der DE-A-37 08 843 ist eine Röntgenstrahlenprüfvorrichtung mit zwei Röntgenstrahlern bekannt, die ein fächerförmiges Strahlenbündel jeweils zu einem L-förmigen Strahlenempfänger aussenden. Die L-förmigen Strahlenempfänger sind dabei so angeordnet, daß sie ein U oder ein Rechteck bilden.

In der GB-A-2 113 828 ist eine Containerprüfanlage beschrie ben, die einen ersten und einen zweiten Strahlensender (z.B. Röntgenquellen) aufweisen kann, die ein Strahlenbündel zu jeweils einem flächigen Leuchtschirm als Strahlenempfänger senden.

Der Erfindung liegt die Aufgabe zugrunde, eine Vorrichtung der eingangs genannten Art so auszuführen, daß die Identifizierbarkeit von Teilen, die sich im Gegenstand befinden, verbessert ist.

Diese Aufgabe wird durch eine Vorrichtung gemäß Anspruch 1 gelöst. Weitere Ausgestaltungen sind in den abhängigen Ansprüchen angegeben.

Vorteil der Erfindung ist, daß der Gegenstand von zwei Richtungen aus durchstrahlt wird, daß der erste zeilenförmige Strahlenempfänger U-förmig ausgebildet ist und daß der zweite zeilenförmige Strahlenempfänger L-förmig ausgebildet ist. Hierdurch kann der Strahlengenerator relativ nahe am Gegenstand angeordnet sein, wobei der Fächerstrahl den Querschnitt des Gegenstandes vollständig durchdringt und wobei die im Rand-bereich des Gegenstandes auftreffende Strahlung dennoch auf den Strahlenempfänger auftrifft. Besonders vorteilhaft umfaßt hierbei der erste Strahlenempfänger einen Tunnel und der zweite Strahlenempfänger ist mit seinen beiden Schenkeln am Tunnel derart angeordnet, daß einer dieser Schenkel dem Mittelteil des ersten Strahlenempfängers gegenüberliegt.

Vorteilhaft ist es weiterhin, wenn der Zentralstrahl der ersten Fächerebene vertikal ausgerichtet ist und wenn der Zentralstrahl der zweiten Fächerebene schräg zur Horizontalen ausgerichtet ist. Somit kann der Gegenstand aus verschiedenen Richtungen durch-strahlt werden, wodurch die Identifizierbarkeit von Teilen im Gegenstand erhöht ist.

Die Erfindung wird anhand der nachfolgenden Beschreibung eines Ausführungsbeispieles und der Zeichnungen näher erläutert.
- Figur 1: zeigt eine Transportstrecke, die durch einen Tunnel der Vorrichtung nach der Erfindung führt,
- Figur 2: zeigt die Anordnung der Strahlengeneratoren und der Strahlenempfänger in einem transportablen Container der Vorrichtung nach der Erfindung in Seitenansicht,
- Figur 3: zeigt die Vorrichtung nach der Erfindung in Draufsicht und
- Figur 4: eine Signalverarbeitungseinrichtung der Vorrichtung nach der Erfindung.

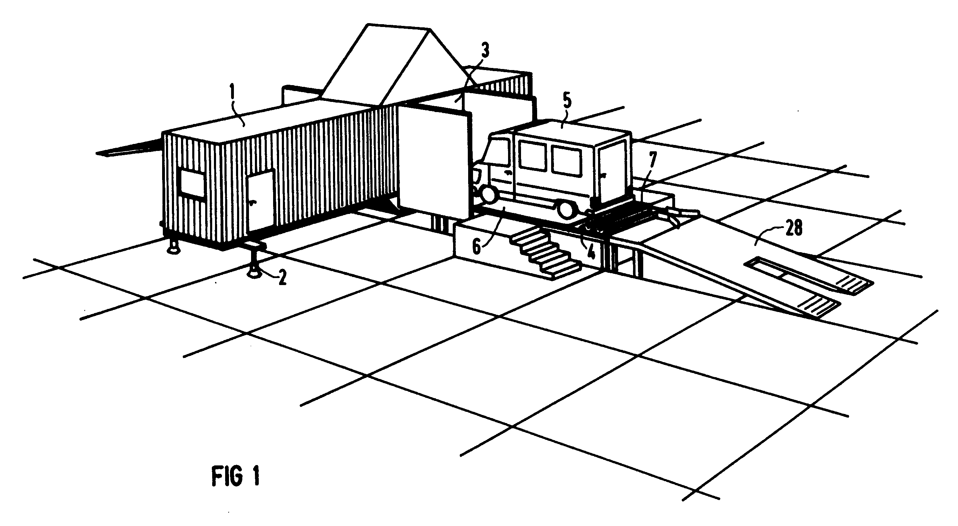

Die Figur 1 zeigt einen Container 1, der auf Stützen 2 lagert und durch den ein Tunnel 3 führt, der an seiner Eingangs- und an seiner Ausgangsseite offen ist. Eine Transportstrecke 4 für Gegenstände, beispielsweise Gepäck, vorzugsweise Container und/oder Fahrzeuge 5, führt durch diesen Tunnel 3. Die Transportstrecke 4 besitzt eine röntgenstrahlendurchlässige Palette 6, die auf angetriebenen Rollen 7 gelagert ist und die den Container und/oder das Fahrzeug 5 trägt.

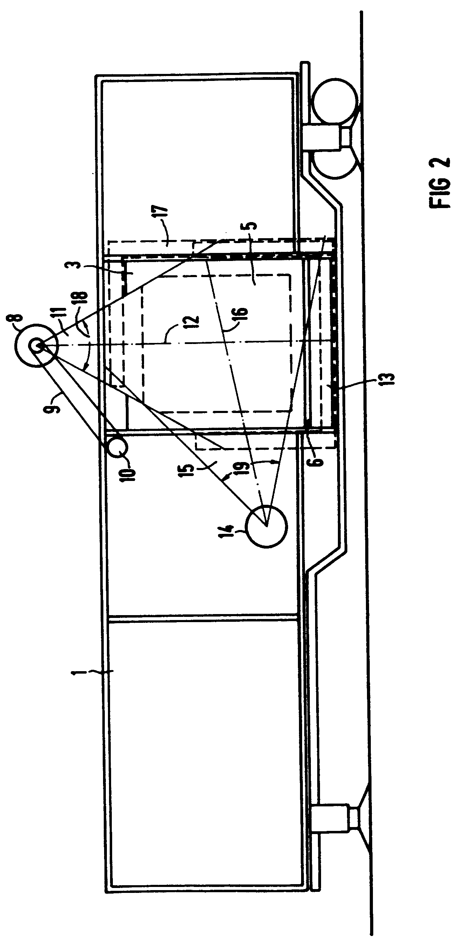

Die Figur 2 zeigt den Container 1 in seitlicher Darstellung im Längsschnitt. Elemente, die bereits in der Figur 1 gekennzeichnet sind, besitzen in der Figur 2 dieselben Bezugszeichen. Die Figur 2 zeigt, daß der Container und/oder das Fahrzeug 5 auf der Palette 6 in den Tunnel 3 eingefahren wurde. Ein erster Strahlengenerator 8 ist über eine Anlenkung 9 um eine zur Transportrichtung der Transportstrecke parallele Achse 10 schwenkbar. Hierdurch kann der Abstand des Strahlengenerators 8 zum Container und/oder Fahrzeug 5 optimal eingestellt werden. Die vom Strahlengenerator 8 ausgesandte Fächerebene 11 ist senkrecht zur Transportrichtung der Transportstrecke. Dabei ist der Zentralstrahl 12 der Fächerebene 11 vertikal ausgerichtet, so daß die Strahlung des Strahlengenerators 8 auf einen U-förmig ausgebildeten Strahlenempfänger 13 auftrifft. Ein weiterer Strahlengenerator 14 ist vorgesehen. Die von dem Strahlengenerator 14 ausgesandte Fächerebene 15 ist ebenfalls senkrecht zur Transportrichtung der Transportstrecke, wobei der Zentralstrahl 16 der Fächerebene 15 schräg zur Horizontalen ausgerichtet ist, so daß die vom Strahlengenerator 14 ausgesandte Strahlung auf einen L-förmig ausgebildeten Strahlenempfänger 17 trifft. Hierbei umfaßt der erste, U-förmige Strahlenempfänger 13 den im Querschnitt rechteckförmigen Tunnel 3 und der L-förmige Strahlenempfänger 17 ist mit seinen beiden Schenkeln derart angeordnet, daß einer dieser Schenkel dem Mittelteil des ersten Strahlenempfängers 13 gegenüberliegt.

Der Fächerwinkel 18 der Fächerebene 11 ist so weit geöffnet daß die Strahlung des Strahlengenerators 8 den Querschnitt des Containers und/oder des Fahrzeuges 5 von oben her vollständig durchdringt und vom U-förmigen Strahlenempfänger 13 empfangen wird. Der Fächerwinkel 19 der Fächerebene 15 ist ebenfalls so weit geöffnet, daß die Strahlung des Strahlengenerators 14 den Querschnitt des Containers und/oder des Fahrzeuges 5 seitlich vollständig durchdringt, so daß die Strahlung auf den L-förmigen Strahlenempfänger 17 auftrifft. Gleichwirkend ist eine Anordnung, bei der der Fächerwinkel 18, 19 der Strahlengeneratoren 8, 14 kleiner ausgebildet ist, wenn die Strahlengeneratoren 8, 14 um eine zur Transportrichtung der Transportstrecke parallele Achse verschwenkbar sind, so daß beim Verschwenken der Generatoren 8, 14 die Strahlung den Querschnitt des Containers und/oder des Fahrzeuges 5 vollständig durchdringt.

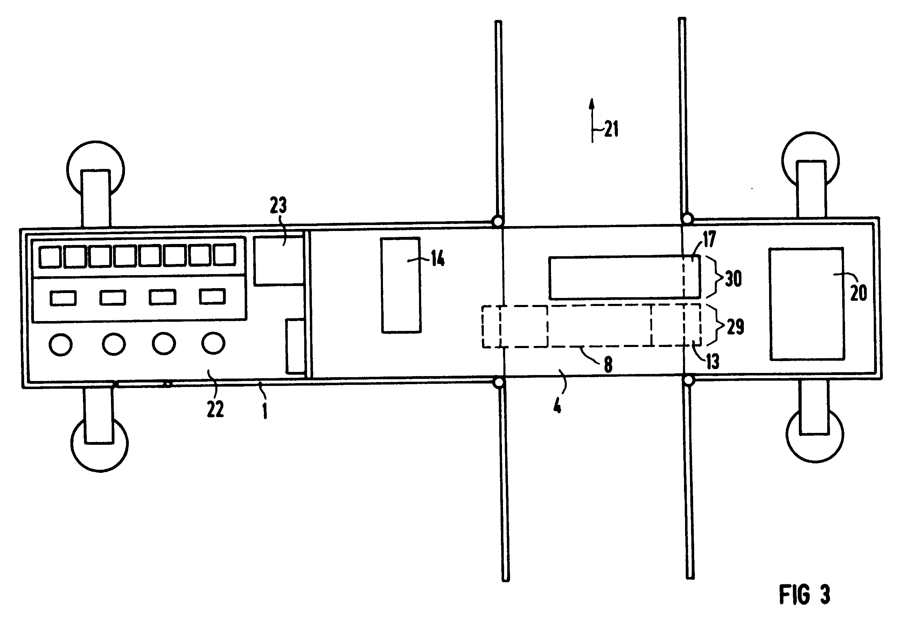

Die Figur 3 zeigt den Container 1 in Draufsicht. Elemente, die bereits in den Figuren gekennzeichnet wurden, erhalten in der Figur 3 dieselben Bezugszeichen. Die Figur 3 zeigt, daß eine Stromversorgung 20 für die Strahlengeneratoren 8, 14, die Strahlengeneratoren 8, 14, die Strahlenempfänger 13, 17 und ein Bereich der Transportstrecke 4 im Container 1 angeordnet sind. Die Strahlenempfänger 13, 17 und die Strahlengeneratoren 8, 14 sind in Transportrichtung 21 der Transportstrecke 4 seitlich zueinander versetzt angeordnet. Im Container 1 ist ein Bedienbereich 22 vorgesehen, in dem Bedienelemente für die Strahlengeneratoren 8, 14 und die Transportstrecke 4 sowie eine Bildverarbeitungseinrichtung 23 angeordnet sind.

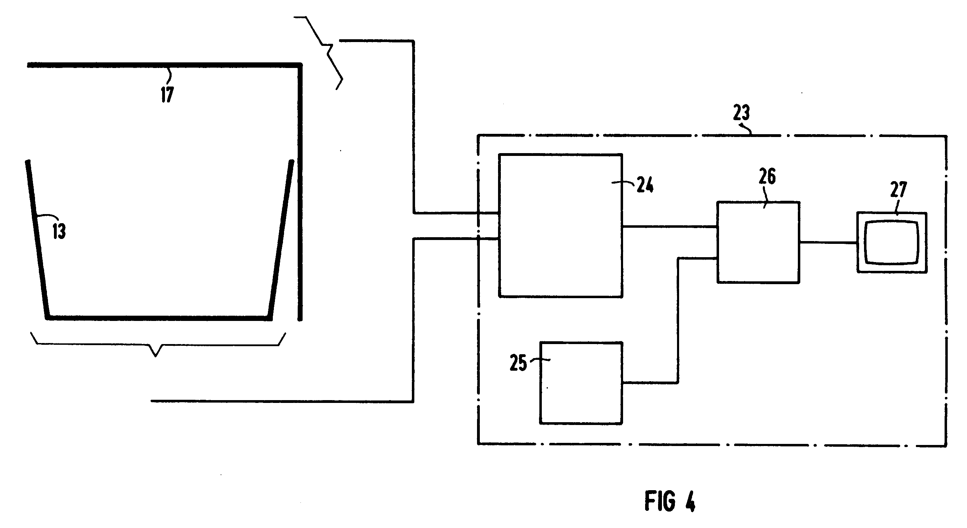

Die Figur 4 zeigt die Bildverarbeitungseinrichtung 23 in prinzipieller Darstellung. Die Signale der Strahlenempfänger 13, 17 werden einem Rechner 24 zum Berechnen eines Bildes aus den von den Strahlenempfängern 13, 17 empfangenen Signalen zugeführt. Es ist ein Speicher 25 vorgesehen, in dem die Bildsignale eines Referenzbildes eines Containers und/oder Fahrzeuges abgespeichert sind. Die Speicherkapazität des Speichers 25 kann so groß sein, daß mehrere Referenzbilder für Fahrzeuge und/oder Container abgespeichert werden können. Zum Abrufen der Referenzbilder ist dann eine nicht gezeigte Auswahlschaltung vorgesehen. Einer Vergleichsschaltung 26 werden die Bildsignale des Rechners 24 und die Signale des Referenzbildes aus dem Speicher 25 zugeführt. Der Vergleichsschaltung 26 ist ein Monitor 27 nachgeschaltet zum Anzeigen des Differenzbildes aus den Bildsignalen des Rechners 24 und den Signalen des Referenzbildes.

Im nachfolgenden soll das Durchsuchen eines Containers und/oder Fahrzeuges nach unzulässigen Gegenständen mit einer Vorrichtung nach der Erfindung beschrieben werden.

Ein Fahrzeug und/oder Container 5 wird hierzu über eine Auffahrrampe 28 (Fig. 1) oder über eine nicht gezeigte Hebevorrichtung auf die Palette 6 der Transportstrecke 4 aufgefahren bzw. aufgebracht. Nachdem der Fahrer das Fahrzeug verlassen hat, wird die Palette 6 durch die angetriebenen Rollen 7 der Transportstrecke 4 mit gleichförmiger Geschwindigkeit in den Tunnel 3 eingefahren. Erreicht das vordere Ende des Containers und/oder des Fahrzeuges 5 den Bereich 29 (Fig. 3) der Transportstrecke 4, so wird der Strahlengenerator 8 zum Aussenden eines Strahlungsimpulses für die Dauer des Durchlaufes aktiviert. Dabei wird der Container und/oder das Fahrzeug 5 von der Strahlung des Strahlengenerators 8 in vertikaler Richtung vollständig durchdrungen, die dann auf den Strahlenempfänger 13 auftrifft. Der Strahlenempfänger 13 wandelt das Strahlungsschattenbild des Containers und/oder Fahrzeuges 5 in elektrische Signale, die dem Rechner 24 zugeführt werden. Beim Erreichen eines Bereiches 30 (Fig. 3) der Transportstrecke 4 wird der Strahlengenerator 14 angesteuert zum Aussenden eines Strahlungsimpulses, der den Container und/oder das Fahrzeug 5 annähernd horizontal durchdringt und der dann auf den Strahlenempfänger 17 auftrifft. Der Strahlenempfänger 17 wandelt das seitliche Strahlungsschattenbild des Containers und/oder des Fahrzeuges 5 in elektrische Signale, die ebenfalls dem Rechner 24 zugeführt werden. Der Container und/oder das Fahrzeug 5 wird scheibenförmig durchstrahlt, wobei die Signale der Strahlenempfänger 13, 17 jeder Scheibe in einem nicht gezeigten Speicher des Rechners 24 abgespeichert werden. Der Rechner 24 berechnet während oder nachdem der Container und/oder das Fahrzeug 5 die Bereiche 29, 30 durchfahren hat, aus den Signalen der Strahlenempfänger 13, 17 ein Strahlungsschattenbild des Containers und/oder des Fahrzeugs 5. Dieses Bild kann ebenfalls in einem Speicher gespeichert werden.

Es ist zu erwähnen, daß die Wände des Containers 1 so ausgelegt sind, daß die Eingangs- und die Ausgangsseite des Tunnels 3 offen sein kann, ohne daß aus den Öffnungen eine unzulässig hohe Strahlung austritt. Dies kann beispielsweise durch eine ausreichend starke Bleiabschirmung im Bereich der Strahlengeneratoren 8, 14 und der Strahlenempfänger 13, 17 erreicht werden.

Es sei erwähnt, daß die Darstellung des Differenzbildes aus dem Bild des durchstrahlten Containers und/oder Fahrzeuges und des Referenzbildes des Containers und/oder Fahrzeuges nur eine Möglichkeit der Bildverarbeitung ist. Durch diese Möglichkeit der Darstellung werden auf dem Bildschirm des Monitors nur Gegenstände sichtbar, die nicht im Referenzbild des Containers und/oder Fahrzeuges enthalten sind. Es ist somit sehr leicht möglich, Gegenstände, die nicht dem Originalzustand des Containers und/oder Fahrzeuges entsprechen, aufzufinden und auf Zulässigkeit zu überprüfen.

Eine weitere Möglichkeit der Durchsuchung des Containers und/oder des Fahrzeuges auf unzulässige Gegenstände ergibt sich durch die Ansteuerung der Strahlengeneratoren 8, 14 mit unterschiedlichen Strahlenenergien. Durch den Vergleich mindestens zweier deckungsgleicher Röntgenbilder, die mit unterschiedlichen Strahlenenergien angefertigt wurden, ist es möglich, Gegenstände mit niedriger und hoher Ordnungszahl zu unterscheiden. Somit können organische Materialien, wie Drogen und Sprengstoffe, deutlich von anderen Materialien, z.B. Metallen (Waffen), unterschieden werden. Besonders vorteilhaft ist es, wenn die Differenz der Strahlenabsorption bei unterschiedlichen Strahlenenergien als Information von Pseudofarben auf dem Bildschirm des Monitors erscheint. Sprengstoff und Drogen können so leicht festgestellt werden.

Der Container 1 ist mobil ausgeführt, so daß er auf einen LKW verladen werden kann und damit transportierbar ist. Hierzu kann der Container zerlegbar sein, so daß seine Einzelteile auch auf mehreren LKW transportierbar sind.

Die Figuren zeigen eine Vorrichtung zum Durchstrahlen von Containern und/oder Fahrzeugen. Eine erfindungsgemäße Vorrichtung ist jedoch nicht hierauf beschränkt. Es können ebenso Gepäckstücke, beispielsweise Koffer und Taschen, durchsucht werden, wenn die Vorrichtung entsprechend ausgelegt ist.

In der Figur 4 sind die beiden Schenkel des U-förmigen Strahlenempfängers 13 im Gegensatz zur Figur 2 in einem stumpfen Winkel gegenüber dem mittleren Schenkel geneigt. Dies führt zu einer besonders großen Eingangsbreite des Meßfeldes.

## Patentansprüche

1. Vorrichtung zum Durchstrahlen von Gegenständen (5) mit fächerförmiger Strahlung (11, 15)
- mit einer Transportstrecke (4) für die Gegenstände (5), deren Transportrichtung senkrecht zur Fächerebene (11, 15) liegt,
- mit einem ersten zeilenförmigen Strahlenempfänger (13), der die Strahlung einer ersten Fächerebene (11) empfängt und
- mit einem zweiten zeilenförmigen Strahlenempfänger (17), der die Strahlung einer zweiten Fächerebene (15) empfängt,
**dadurch gekennzeichnet,**
daß der erste zeilenförmige Strahlenempfänger (13) U-förmig und
der zweite zeilenförmige Strahlenempfänger (17) L-förmig ausgebildet ist.

2. Vorrichtung nach Anspruch 1, wobei der erste Strahlenempfänger (13) einen Tunnel (3) umfaßt und der zweite Strahlenempfänger (17) mit seinen beiden Schenkeln am Tunnel (3) derart angeordnet ist, daß einer dieser Schenkel dem Mittelteil des ersten Strahlenempfängers (13) gegenüberliegt.

3. Vorrichtung nach Anspruch 1 oder 2, wobei der Zentralstrahl (12) der ersten Fächerebene (11) vertikal ausgerichtet ist und wobei der Zentralstrahl (16) der zweiten Fächerebene (15) schräg zur Horizontalen ausgerichtet ist.

4. Vorrichtung nach einem der Ansprüche 1 bis 3, wobei ein die erste Facherebene (11) erzeugender Strahlengenerator (8) um eine zur Transportrichtung der Transportstrecke (4) parallele Achse (10) schwenkbar ist.

5. Vorrichtung nach einem der Ansprüche 1 bis 4, wobei ein die zweite Fächerebene (15) erzeugender Strahlengenerator (14) um eine zur Transportrichtung der Transportstrecke (4) parallele Achse schwenkbar ist.

6. Vorrichtung nach einem der Ansprüche 1 bis 5, wobei die Vorrichtung zum Durchstrahlen von Containern und/oder Fahrzeugen ausgebildet ist.

## Claims

1. Device for irradiating objects (5) with fan-shaped radiation (11, 15),
- having a conveyor (4) for the objects (5), the conveying direction of this conveyor being perpendicular to the fan plane (11, 15),
- having a first line radiation detector (13) which detects the radiation of a first fan plane (11) and
- having a second line radiation detector (17) which detects the radiation of a second fan plane (15),
characterised in that the first line radiation detector (13) is formed in a U-shape and
the second line radiation detector (17) is formed in an L-shape.

2. Device according to claim 1, the first radiation detector (13) enclosing a tunnel (3) and the second radiation detector (17) being arranged with its two limbs at the tunnel (3), in such a way that one of these limbs is located opposite the middle part of the first radiation detector (13).

3. Device according to claim 1 or 2, the central beam (12) of the first fan plane (11) being aligned vertically and the central beam (16) of the second fan plane (15) being aligned at an angle to the horizontal.

4. Device according to one of claims 1 to 3, a radiation generator (8) generating the first fan plane (11) being pivotable around an axis (10) which is parallel to the conveying direction of the conveyor (4).

5. Device according to one of claims 1 to 4, a radiation generator (14) generating the second fan plane (15) being pivotable around an axis which is parallel to the conveying direction of the conveyor (4).

6. Device according to one of claims 1 to 5, the device being constructed for irradiating containers and/or vehicles.

## Revendications

1. Dispositif pour réaliser la radioscopie d'objets (5) avec un rayonnement en forme d'éventail (11,15), comportant
- une section de transport (4) pour les objets (5), dont la direction de transport est perpendiculaire au plan (11, 15) de l'éventail,
- un premier récepteur de rayonnement de forme linéaire (13), qui reçoit le rayonnement d'un premier plan (11) de l'éventail, et
- un second récepteur linéaire de rayonnement (17), qui reçoit le rayonnement d'un second plan (15) de l'éventail,
caractérisé par le fait
que le premier récepteur linéaire de rayonnement (13) est en forme de U, et
que le second récepteur linéaire de rayonnement (17) est réalisé en forme de L.

2. Dispositif suivant la revendication 1, dans lequel le premier récepteur de rayonnement (13) comporte un tunnel (3) et le second récepteur de rayonnement (17) est dispose, par ses deux branches, contre le tunnel (3), de telle sorte que l'une de ces branches est située en vis-à-vis de la partie médiane du premier récepteur de rayonnement (13).

3. Dispositif suivant la revendication 1 ou 2, dans lequel le rayon central (12) du premier plan (11) de l'éventail est vertical et le rayon central (16) du second plan (15) de l'éventail est oblique par rapport à l'horizontale.

4. Dispositif suivant l'une des revendications 1 à 3, dans lequel un générateur de faisceau (8), qui produit le Premier plan (11) de l'éventail peut pivoter autour d'un axe (10) parallèle à la direction de transport de la section de transport (4).

5. Dispositif suivant l'une des revendications 1 à 4, dans lequel un générateur de faisceau (14), qui produit le second plan (15) de l'éventail, peut pivoter autour d'un axe parallèle à la direction de transport de la section de transport (4).

6. Dispositif suivant l'une des revendications 1 à 5, dans lequel le dispositif est agencé pour réaliser l'examen radioscopique de conteneurs et/ou de véhicules.
